# FASCICULE DE BREVET EUROPEEN

(11) **EP 0 950 034 B1**
(45) Date de publication et mention de la délivrance du brevet: **13.03.2002**
(21) Numéro de dépôt: 98954501.7
(22) Date de dépôt: 02.11.1998
(51) Int. Cl.: C04B 28/04, C04B 18/14, C07D 401/14

(54) **LAITIER DE CIMENTATION D'UN PUITS, NOTAMMENT D'UN PUITS PETROLIER**
ZEMENTSCHLAMM FÜR DIE ZEMENTIERUNG VON BOHRLÖCHERN INSBESONDERE ÖLBOHRLÖCHERN
SLAG FOR CEMENTING A WELL, IN PARTICULAR AN OIL WELL

(30) Priorité: 03.11.1997 FR 9713796
(43) Date de publication de la demande: 20.10.1999
(73) Titulaire: INSTITUT FRANCAIS DU PETROLE, 92852 Rueil-Malmaison Cedex (FR)
(72) Inventeur: NOIK, Christine, F-78230 Le Pec (FR); RIVEREAU, Alain, F-92500 Rueil Malmaison (FR); VERNET, Christian, F-78200 Jouy-Mauvoisin (FR)
(74) Mandataire: Des Termes, Monique
(86) Numéro de dépôt international: FR9802339
(87) Numéro de publication internationale: WO9923046

(56) Documents cités:
- EP-A- 0 518 777
- WO-A-90/11977
- US-A- 4 501 830
- US-A- 4 935 060
- US-A- 5 531 823
- DILLENBECK R L ET AL: "THE EFFECT OF MICROSILICA ON THE THERMAL STABILITY OF LIGHTWEIGHT CEMENT SYSTEMS" ANNUAL SPE/CIM PETROL SOC. HORIZ. WELLS CONFERENCE, no. 116, 1990, pages 1-5, XP002044825
- NELSON E B: "PORTLAND CEMENTS CHARACTERIZED, EVALUATED" OIL AND GAS JOURNAL, vol. 81, no. 5, 7 février 1983, pages 73-77, XP000142872

## Description

### Domaine technique

La présente invention concerne un laitier de cimentation d'un puits, notamment d'un puits d'exploration ou d'exploitation de gisements souterrains, tels les gisements d'hydrocarbures ou géothermiques.

Les cimentations de puits sont des opérations très spécifiques nécessitant l'injection d'un laitier de ciment à travers des tubes (casing ou tubing) par pompage à partir de la surface. Un des but premiers de ces opérations est de cimenter l'espace annulaire entre l'extérieur du tube de cuvelage et le trou foré. D'autres opérations de cimentation, bien connues de l'homme du métier, peuvent également être concernées, par exemple les mises en place de bouchons ou des opérations de «squeeze». Le puits, espace intérieur et espace annulaire, est rempli par un fluide, généralement le fluide de forage de la phase de forage précédente, ou par un fluide de composition proche. Le laitier de ciment doit être mis en place dans l'espace annulaire par circulation tout en chassant vers la surface le fluide annulaire d'origine. Les fonctions principales des laitiers de ciment pétroliers sont notamment d'assurer une étanchéité de l'espace annulaire aux fluides contenus dans les roches, gaz, huile ou eau et de maintenir mécaniquement les tubes dans le trou foré. Pour cela, la caractéristique de résistance à la compression est primordiale.

Compte tenu de la mise en place du laitier par circulation, le contrôle de la rhéologie est également très important, ainsi que la possibilité d'utiliser des additifs adaptés à des conditions particulières, par exemple des réducteurs de filtrat, des retardateurs ou accélérateurs de prise, des agents de dispersion, des antimousses, des allégeants ou des alourdissants.

### État de la technique antérieure

Les formulations courantes d'un laitier de ciment pour cimentation de puits pétroliers comportent une quantité d'eau de l'ordre de 45% du poids du ciment, ce qui limite considérablement les propriétés mécaniques du laitier durci, notamment sa résistance à la compression.

On connaît d'autre part des formulations de ciment qui conduisent à des propriétés mécaniques très supérieures, comme décrit par exemple dans le brevet européen EP 0 518 777, mais qui ne conviennent pas comme laitier de cimentation de puits, ne serait-ce qu'en raison de leur proportion d'eau insuffisante.

On connaît aussi de WO 90/11977 une formulation de ciment qui comprend pour 100 kg de ciment Portland G, 20 kg de microsilice, 25 kg d'oxyde de silicium, 36,6 1 d'eau, 0,97 kg d'un retardateur, 0,5 kg d'un dispersant et 7 1 d'un agent de filtration.

### Exposé de l'invention

Le problème se pose par conséquent de définir une composition optimisée de laitier dont la rhéologie convienne pour la cimentation d'un puits pétrolier ou analogue, qui comporte une quantité d'eau significativement inférieure à celle des laitiers préconisés jusqu'à présent pour cette application, et qui, après durcissement, présente des caractéristiques mécaniques très supérieures à celles des laitiers de cimentation de l'art antérieur.

Ces résultats sont obtenus, selon l'invention, avec un laitier qui comporte :
- un liant hydraulique du groupe constitué par les ciments Portland classe G (API), les ciments Portland classe H (API) et les autres liants hydrauliques à faible teneur en aluminates,
- une microsilice de granulométrie comprise dans la gamme 0,1 à 0,50 micromètres, à raison de 20 à 35% en poids par rapport au liant hydraulique.
- un ajout de particules moyennes, minéral et/ou organique, de granulométrie comprise dans la gamme 0,5-200 micromètres, à raison de 20 à 35% en poids par rapport au liant hydraulique, la quantité dudit ajout de particules moyennes étant inférieure ou égale à la quantité de microsilice,
- un agent superplastifiant et/ou fluidifiant hydrosoluble en proportion comprise entre 1% et 3% en poids par rapport au liant hydraulique, et
- de l'eau en quantité au plus égale à 30% du poids du liant hydraulique.

De préférence, pour une composition donnée, la quantité d'eau est légèrement supérieure à celle juste suffisante pour remplir les vides entre les grains de la composition, de façon à assurer la rhéologie indispensable.

Dans des modes de réalisation préférés, la composition de laitier de l'invention présente encore une ou plusieurs des caractéristiques suivantes :
- Le liant hydraulique est un ciment Portland classe G.
- Le liant hydraulique est constitué de particules dont les grosseurs sont réparties dans la gamme 0,1-100 micromètres.
- Le liant hydraulique est constitué de particules dont les grosseurs sont réparties dans la gamme 10 à 50 micromètres.
- La microsilice est une fumée de silice provenant de l'industrie du zirconium.
- La microsilice est présente à raison de 20-30% en poids par rapport au liant hydraulique.
- La microsilice est présente à raison de 20 à 25% en poids par rapport au liant hydraulique.
- La microsilice est constituée d'agglomérat de particules dont la grosseur moyenne est voisine de 3 micromètres.
- L'ajout de particules moyennes est un ajout organique de billes de matière plastique, par exemple de polystyrène.
- L'ajout de particules moyennes est un ajout minéral choisi parmi la silice, l'argile, les billes de verre, des sels métalliques, la baryte, l'hématite et l'ilménite.
- L'ajout de particules moyennes est un ajout minéral de particules siliceuses.
- L'ajout de particules moyennes est présent à raison de 20 à 30% en poids par rapport au liant hydraulique.
- L'ajout de particules moyennes est un ajout minéral de sable siliceux dont les particules ont des grosseurs réparties dans la gamme 5-200 micromètres.
- L'ajout de particules moyennes est un ajout minéral de sable siliceux dont les particules ont une grosseur moyenne voisine de 50 micromètres.
- L'ajout de particules moyennes est un ajout minéral de quartz broyé.
- L'agent hydrosoluble est composé de polymère ou de copolymère fortement ionisé dérivé de fonctions sulfonées et/ou de phosphate, phosphonate, carboxylate.
- L'agent hydrosoluble est un agent du groupe constitué par le naphtalène sulfonate, le lignosulfate, la mélanine et analogues.
- L'agent hydrosoluble est un fluidifiant contenant des fonctions sulfonées ou phosphatées.
- La quantité d'eau est de préférence comprise dans la gamme 20-30% du poids du liant hydraulique.

### Brève description des dessins

On décrira ci-après des exemples de réalisation de l'invention et des essais comparatifs, en référence aux figures du dessin joint.
- La figure 1 montre les courbes de contraintes τ - cisaillement γ à 80°C de trois formulations de laitier qui diffèrent par la microsilice utilisée ;
- la figure 2 montre les courbes de contraintes τ - cisaillement γ à 80°C pour deux formulations de laitier qui diffèrent par la nature du fluidifiant utilisé ;
- la figure 3 montre les courbes de contraintes τ - cisaillement γ à 20°C pour cinq formulations de laitier de granulométries différentes, et
- la figure 4 montre les courbes de contraintes τ - cisaillement γ à 20°C pour deux formulations de laitier différant notamment par leur teneur en eau.

### Exposé détaillé des modes de réalisation

Dans les exemples suivants, on a utilisé un ciment. Portland correspondant aux normes pétrolières Classe G. La poudre de ciment, d'une étendue granulométrique très large (entre 0,1 et 100 µm) ayant une valeur D50 d'environ 14 µm et une surface spécifique BET d'environ 1 m²/g, a des grains de formes anguleuses très variées.

La valeur D50 représente la taille de particule en dessous de laquelle 50 % des particules ont une dimension inférieure à cette valeur D50.

La silice, utilisée comme ajout minéral de particules moyennes, est sous forme de quartz broyé et est composée majoritairement d'oxyde de silicium, de traces d'aluminium, de fer et de potassium. Les grains, très anguleux, ont une étendue granulaire comprise entre 0,5 et 200 µm, de préférence entre 1 et 150 µm, une valeur D50 d'environ 42 µm, et une surface spécifique mesurée par BET de 0,46 m²/g.

La microsilice employée (microsilice a) est de structure est de structure amorphe, la taille des agglomérats constituant la poudre varie de 1 à 50 µm. L'observation au microscope électronique à balayage montre que les grains de poudres sont constitués d'associations de particules élémentaires sphériques (0,1 à 2 µm). Ces particules sont des microsphères amorphes de densité proche de 2,2. La valeur de D50 est de 3 µm.

Enfin, le superplastifiant est le fluidifiant D80 (Dowell) qui est un polynaphtalène sulfonate de sodium contenant 40 % en masse de matière sèche et 60 % d'eau. Ce polymère permet de fluidifier le mélange et de diminuer la quantité d'eau utilisée pour une même viscosité. Il agit également comme retardateur de prise.

Ainsi, les valeurs D50 du ciment, des particules moyennes du type silice et de la microsilice sont respectivement 14, 42 et 3 µm. Il est clair que les trois produits granulaires utilisés (ciment, ajout et microsilice) ont des tailles de particules qui se répartissent relativement entre elles d'une façon spécifique compte tenu de la valeur de leur D50. On ne sortira pas de l'invention si l'on utilise d'autres particules équivalentes en taille et en fonction.

### EXEMPLE I : Influence de la provenance de la microsilice

On formule des composition de laitier avec les trois microsilices différentes du tableau 1 ci après.

**TABLEAU 1**

| microsilice | a | b | c |
|---|---|---|---|
| Provenance industrielle | Industrie du Zirconium | Industrie du silicium | Industrie du silicium |
| Surface spécifique (BET) | 12-13 m2/g | 10-11 m2/g | 17 m2/g |
| Taille et forme des grains | agglomérats (particules élémentaires de 0,1-2µm) | grains 0,5-2µm | petits grains 0,02-0,5µm |

Ces microsilices sont incorporées à la formulation suivante (% en poids par rapport au ciment) :
- ciment Portland classe G : 100
- silice (quartz broyé) : 20
- fluidifiant D80 (Dowell) : 1,8
- Eau totale : 27
- microsilice: 24

Formulation A: avec microsilice a
Formulation B: avec microsilice b
Formulation C: avec microsilice c

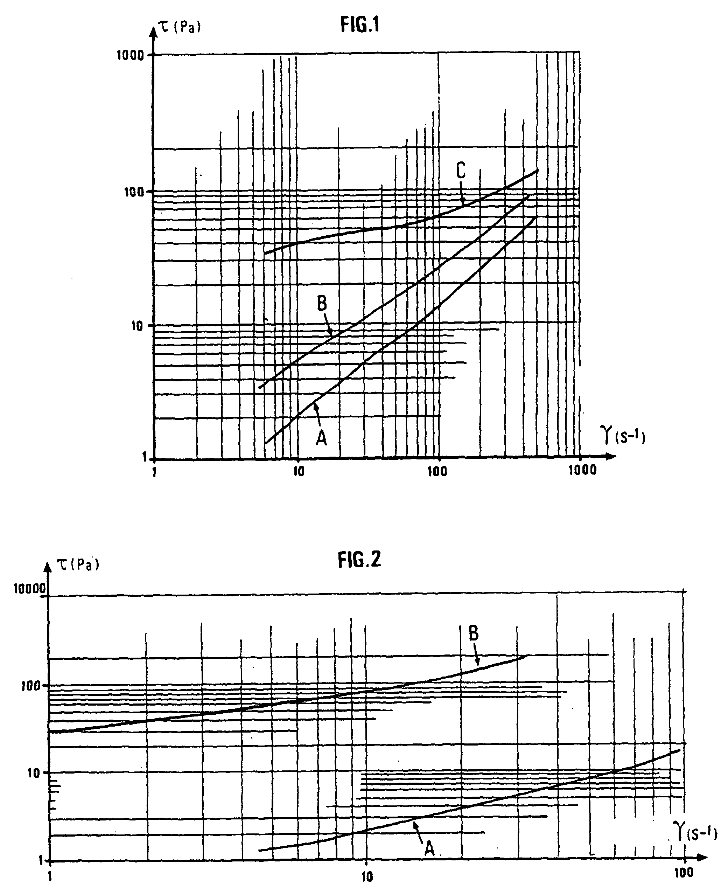

Les propriétés rhéologiques sont apparentes sur la figure 1.

La viscosité la plus favorable suivant les critères issus des opérations de cimentation sur puits est obtenue avec la microsilice a.

Critère de rhéologie pour un ciment pétrolier: Pour une loi d'écoulement de type Oswald (τ = K. γⁿ) avec K proche de 0.5 et n proche de 1, la densité équivalente en circulation (ECD) reste inférieure à la valeur de 0,5 admise par la profession.

La densité équivalente en circulation (ECD) est définie telle que la pression que subit la formation lors de la mise en place du laitier de ciment reste inférieure à la pression de fracturation du réservoir.

Les temps de pompabilité, définis comme le temps nécessaire pour la mise en place du laitier de ciment dans le puits avec un minimum de 2 heures, sont donnés dans le tableau 2 ci-après donne pour les 3 formulations, A, B, C.

**TABLEAU 2**

| Formulation | A | B | C |
|---|---|---|---|
| Temps | 120 min. | 90 min. | 48 min. |

La formulation A est donc la plus performante.

### EXEMPLE II : Choix du fluidifiant par rapport à la microsilice.

On prépare les formulations suivantes exprimées en % en poids par rapport au ciment :
- ciment Portland classe G: 100
- silice (comme dans l'exemple 1) : 20
- fluidifiant : 1,8
- eau totale : 27
- microsilice a : 24

Formulation A: fluidifiant D80 polynaphtalène sulfonate
Formulation B: fluidifiant Styrène acrylate

La viscosité est plus favorable avec le fluidifiant de la formulation A (fig. 2).

Le comportement de la formulation B est dû à des interactions spécifiques entre le fluidifiant fonctions acrylates et la microsilice provenant de l'industrie du zirconium. Il est donc préférable de formuler avec ce type de microsilice des fluidifiants contenant des fonctions sulfonés ou phosphatés et d'éviter les fonctions acrylate.

### EXEMPLE III : Optimisation du pourcentage en particules par rapport à des critères d'écoulement et de perte de charge pour la cimentation de puits.

Le danger principal lors de la mise en place du laitier de ciment est la génération de pressions supérieures aux pressions de fracturation des roches traversées au cours du forage. Les pressions générées par l'injection de fluides en particulier de ciment au travers de la complétion d'un puits sont dues aux frottements. Pour ce type d'opération, un facteur important est le contrôle de l'écoulement du laitier de ciment et donc la connaissance de son comportement rhéologique. A partir d'un choix particulier de paramètres opérationnels, on déduit les pertes de charges et de pressions acceptables en tenant compte de la rhéologie du laitier de ciment.

Le choix de la composition se fait par optimisation de la rhéologie à partir d'une certaine quantité d'eau fixée.

On prépare les formulations suivantes exprimées en % par rapport au ciment :
- Ciment Portland classe G : 100
- Silice (comme dans l'exemple 1)
- Fluidifiant (comme dans l'exemple 1) : 1,8
- Eau totale : 27
- Microsilice a :

Formulation A : Microsilice a à 24% et silice à 20%
Formulation B1 : Microsilice a à 30% et silice à 20%
Formulation B2 : Microsilice a à 35% et silice à 20%
Formulation C1 : Microsilice a à 24% et silice à 40%
Formulation C2 : Microsilice a à 24% et silice à 60%

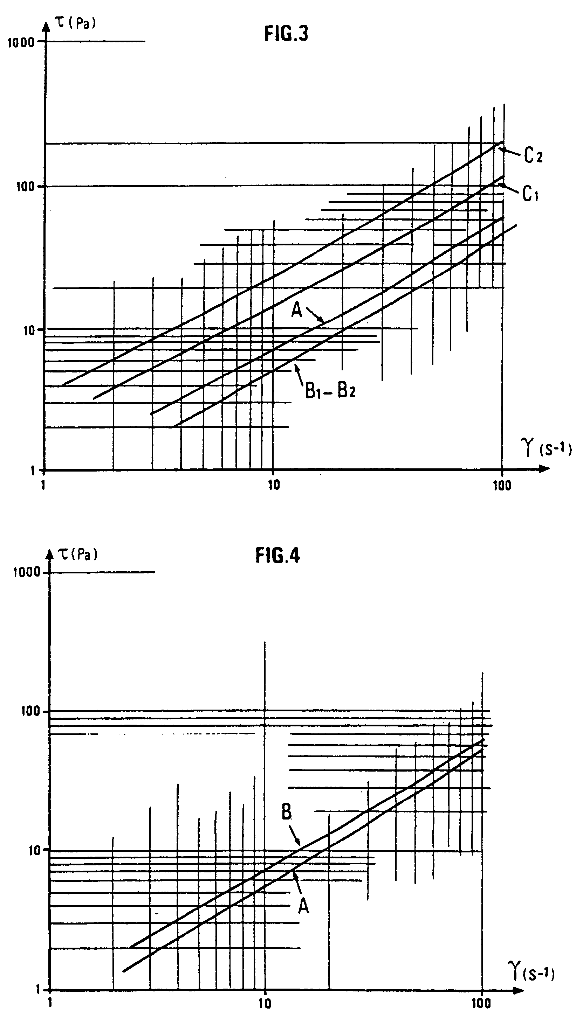

Ces formulations ont fourni les résultats représentés sur la figure 3.

### Optimisation des particules fines : (A) en comparaison avec (B1) et (B2).

Plus la quantité de fines augmente, plus les particules peuvent s'écouler par un effet similaire à un roulement à billes et donc plus le laitier est fluide. Une limite en amélioration de viscosité est atteinte si on compare les courbes d'écoulement B1 et B2. Un pourcentage optimal de fines, entre 20 et 35 %, est ainsi déterminé.

### Optimisation des particules moyennes: (A) en comparaison avec (C1) et (C2).

De même, le pourcentage relatif de particules moyennes par rapport à des particules fines est déterminé si on compare les courbes d'écoulement C1 et C2 par rapport à celle de A.

Les formulations C1 et C2 contiennent plus de particules moyennes par rapport aux particules fines (microsilice), et présentent alors une rhéologie (courbes C1 et C2 de la figure 3) supérieure aux formulations B1-B2, A, qui toutes trois ont une quantité de particules moyennes inférieure à celle des particules fines. Les laitiers de ciment ayant une rhéologie comparable à celle de C1 ou C2, conviennent mal, ou même pas à la cimentation de puits pétroliers.

En effet, cela est confirmé par un autre essai sur des formulations avec les quantités de silice et de microsilice rassemblées dans le tableau 3 ci-dessous. Les résultats de ces essais (τ en (Pa)) sont également donnés dans le tableau 3.

**TABLEAU 3**

| | τ (Pa) | | | |
|---|---|---|---|---|
| Microsilice | 20 % | 25 % | 30 % | 35 % |
| Silice 20 % | 87 | 110 | 120 | 120 |
| Silice 60 % | 267 | 255 | 257 | 257 |

τ (Pa) représente les valeurs e contraintes mesurées pour un cisaillement donné de 100 s⁻¹. Les formulation présentant des valeurs de contraintes inférieures à 130 Pa sont obtenues pour des rapports microsilice/silice au plus égal à 1.

Dans le cas du taux relativement important de 35 % de microsilice, un essai donne, pour 35 % de particules moyennes, une valeur de contrainte de l'ordre de 130 Pa qui représente une rhéologie parfois acceptable, mais généralement limite.

Pour les formulation contenant 60 % de silice et entre 20 à 35 % de microsilice, les contraintes de cisaillement sont trop importantes pour l'application présente.

Pour une quantité de fines de l'ordre de 24%, une quantité en poids de particules moyennes de 20 % donne une bonne rhéologie pour une géométrie de puits classique.

De plus, la formulation A qui contient de l'eau dans un rapport eau sur ciment de 0,27 a une résistance à la compression 3,5 fois supérieure à une formulation classique de ciment pour puits qui contient de l'eau dans un rapport eau sur ciment supérieur à 0,4.

### EXEMPLE IV : Comparaison des propriétés d'une formulation de laitier de ciment classique avec une formulation selon la présente invention.

Les propriétés principales demandées pour un ciment pétrolier sont listées ci-dessous. Une comparaison systématique est réalisée entre la formulation de l'invention A et un ciment pétrolier (B) classique.
Formulation A exprimée en % par rapport au ciment
- ciment (comme dans l'exemple 1): 100
- Silice (comme dans l'exemple 1): 20
- fluidifiant D 80 (comme dans l'exemple 1) : 1,8
- Eau totale : 27
- microsilice a : 24
- Retardateur D 121 (Dowell): 0,8
Formulation B exprimée en % par rapport au ciment
- ciment (comme dans l'exemple 1)) : 100
- Silice S8 ( Sifraco ) :40
- Filler Microblock (Halliburton): 14,3
- Réducteur de filtrat Halad 361 A (Halliburton): 8,5
- Dispersant: CFR3 (Halliburton): 0,25
- Retardateur HR 15 (Halliburton) :0,7
- Eau totale :44%

La figure 4 montre une courbe de viscosité plus faible pour la formulation (A), ce qui limite d'autant plus les pertes de charges dans le puits.

La résistance à la compression, le temps de pompabilité, c'est à dire le temps nécessaire à la mise en place du laitier dans le puits et à la solidification du laitier, et la densité optimisée pour contrôler la pression lors de la mise en place en partielle dans les cas de puits chaud et profond, sont rapportés dans le tableau 4 ci-après. Ce tableau confirme la performance du laitier de ciment à base d'une formulation A notamment pour la cimentation de puits chaud et profond.

**TABLEAU 4**

| | Résistance à la compression (Mpa) | Temps de pompabilité à 120°C | Densité |
|---|---|---|---|
| Formulation A | 35 | - | 1,9 |
| Formulation B | 172 | 6h40 | 2,3 |

## Revendications

1. Laitier de cimentation pour la cimentation d'un puits, notamment d'un puits pétrolier, **caractérisé en ce qu'**il comprend :
- au moins un liant hydraulique du groupe constitué par les ciments Portland classe G (API), les ciments Portland classe H (API) et les autres liants hydrauliques à faible teneur en aluminates,
- une microsilice de granulométrie comprise dans la gamme 0,1 à 50 micromètres, à raison de 20 à 35% en poids par rapport au liant hydraulique.
- un ajout de particules moyennes, minéral et/ou organique, de granulométrie comprise dans la gamme 0,5-200 micromètres à raison de 20 à 35% en poids par rapport au liant hydraulique, la quantité dudit ajout de particules moyennes étant inférieure ou égale à la quantité de microsilice,
- un agent superplastifiant et/ou fluidifiant hydrosoluble en proportion comprise entre 1% et 3% en poids par rapport au liant hydraulique, et
- de l'eau en quantité au plus égale à 30% du poids du liant hydraulique.

2. Laitier selon la revendication 1, dont le liant hydraulique est un ciment Portland classe G.

3. Laitier selon la revendication 1 ou 2, dont le liant hydraulique est constitué de particules dont les grosseurs sont réparties dans la gamme 0,1-100 micromètres.

4. Laitier selon la revendication 3, dont le liant hydraulique est constitué de particules dont les grosseurs sont réparties dans la gamme 10-50 micromètres.

5. Laitier selon l'une des revendications 1 à 4, dont la microsilice est une fumée de silice provenant de l'industrie du zirconium.

6. Laitier selon l'une des revendications précédentes dont la microsilice est présente à raison de 20-30% en poids par rapport au liant hydraulique.

7. Laitier selon l'une des revendications précédentes dont la microsilice est présente à raison de 20 à 25% en poids par rapport au liant hydraulique.

8. Laitier selon l'une des revendications précédentes dont la microsilice est constituée d'agglomérat et de particules dont la grosseur moyenne est voisine de 3 micromètres.

9. Laitier selon l'une quelconque des revendications précédentes dont l'ajout de particules moyennes est un ajout organique de billes de matière plastique.

10. Laitier selon la revendication 9 dans lequel la matière plastique est le polystyrène.

11. Laitier selon l'une des revendications 1 à 8 dont l'ajout de particules moyennes est un ajout minéral choisi parmi la silice, l'argile, les billes de verre, des sels métalliques, la baryte, l'hématite et l'ilménite.

12. Laitier selon l'une des revendications 1 à 8 dont l'ajout de particules moyennes est un ajout minéral de particules siliceuses.

13. Laitier selon l'une des revendications précédentes dont l'ajout de particules moyennes est présent à raison de 20 à 30% en poids par rapport au liant hydraulique.

14. Laitier selon l'une des revendications 1 à 8, 12 et 13 dont l'ajout de particules moyennes est un ajout minéral de sable siliceux dont les particules ont des grosseurs réparties dans la gamme 5-200 micromètres.

15. Laitier selon l'une des revendications 1 à 8 et 12 à 14 dont l'ajout de particules moyennes est un ajout minéral de sable siliceux dont les particules ont une grosseur moyenne voisine de 50 micromètres.

16. Laitier selon l'une des revendications 1 à 8 et 12 à 14 dont l'ajout de particules moyennes est un ajout minéral de quartz broyé.

17. Laitier selon l'une des revendications précédentes dont l'agent hydrosoluble est composé de polymère ou de copolymère fortement ionisé dérivé de fonctions sulfonées et/ou de phosphate, phosphonate, carboxylate.

18. Laitier selon l'une quelconque des revendications 1 à 16 dont l'agent hydrosoluble est un agent du groupe constitué par le naphtalène sulfonate, le lignosulfate, la mélanine et analogues.

19. Laitier selon l'une des revendications précédentes dont l'agent hydrosoluble est un fluidifiant contenant des fonctions sulfonées ou phosphatées.

20. Laitier selon l'une des revendications précédentes dont la quantité d'eau est comprise dans la gamme 20-30% du poids du liant hydraulique.

## Patentansprüche

1. Zementschlamm zur Zementierung von Bohrlöchern, insbesondere Ölbohriöchern, **dadurch gekennzeichnet, dass** er umfasst:
- wenigstens ein hydraulisches Bindemittel der Gruppe, gebildet durch die Portland-Zemente Klasse G (API), die Portland-Zemente Klasse H (API) und die anderen hydraulischen Bindemittel mit einem geringen Gehalt an Aluminaten,
- ein Mikrosiliciumdioxid mit einer in dem Bereich zwischen 0,1 und 50 µm enthalten Granulometrie bzw. Korngröße und einem Anteil von 20 bis 35 Gew.% in Bezug auf das hydraulische Bindemittel,
- eine Zugabe mittlerer Teilchen, mineralisch und/oder organisch, deren Korngröße enthalten ist in dem Bereich 0,5-200 µm mit einem Anteil von 20 bis 35 Gew.% in Bezug auf das hydraulische Bindemittel, wobei die Menge der genannten Zugabe mittlerer Teilchen kleiner als oder gleich wie die Menge des Mikrosiliciumdioxids ist,
- einen wasserlöslichen Superplastizierungs- und/oder Fluidisierungs-Wirkstoff mit einem zwischen 1 und 3 Gew.% enthaltenen Anteil, bezogen auf das hydraulische Bindemittel, und
- Wasser in einer höchstens 30 Gew.% des hydraulischen Bindemittels entsprechenden Menge.

2. Schlamm nach Anspruch 1, dessen hydraulisches Bindemittel ein Portland-Zement Klasse G ist.

3. Schlamm nach Anspruch 1 oder 2, dessen hydraulisches Bindemittel durch Teilchen gebildet wird, deren Größen über den Bereich von 0,1-100 µm verteilt sind.

4. Schlamm nach Anspruch 3, dessen hydraulisches Bindemittel durch Teilchen gebildet wird, deren Größen über den Bereich von 10-50 µm verteilt sind.

5. Schlamm nach einem der Ansprüche 1 bis 4, dessen Mikrosiliciumdioxid ein aus der Zirkoniumindustrie stammender Siliciumdioxid-Rauch ist.

6. Schlamm nach einem der vorangehenden Ansprüche, dessen Mikrosiliciumdioxid einen Anteil von 20-30 Gew.% darstellt, bezogen auf das hydraulische Bindemittel.

7. Schlamm nach einem der vorangehenden Ansprüche, dessen Mikrosiliciumdioxid einen Anteil von 20-25 Gew.% darstellt, bezogen auf das hydraulische Bindemittel.

8. Schlamm nach einem der vorangehenden Ansprüche, dessen Mikrosiliciumdioxid durch ein Agglomerat und durch Teilchen gebildet wird, der mittlere Größe ungefähr 3 µm beträgt.

9. Schlamm nach einem der vorangehenden Ansprüche, dessen Zugabe mittlerer Teilchen eine organische Zugabe von Kunststoffkugeln ist.

10. Schlamm nach Anspruch 9, bei dem das Kunststoffmaterial Polystyrol ist.

11. Schlamm nach einem der Ansprüche 1 bis 8, dessen Zugabe mittlerer Teilchen eine mineralische Zugabe ist, ausgewählt unter Siliciumdioxid, Ton, Glaskugeln, Metallsalzen, Baryt, Hämatit und Ilmenit.

12. Schlamm nach einem der Ansprüche 1 bis 8, dessen Zugabe mittlerer Teilchen eine mineralische Zugabe von siliciumhaltigen Teilchen ist.

13. Schlamm nach einem der vorangehenden Ansprüche, dessen Zugabe mittlerer Teilchen einen Anteil von 20 bis 30 Gew.% ausmacht, bezogen auf das hydraulische Bindemittel.

14. Schlamm nach einem der vorangehenden Ansprüche, dessen Zugabe mittlerer Teilchen eine mineralische Zugabe aus siliciumhaltigem Sand ist, dessen Teilchen Größen haben, die über den Bereich von 5-200µm verteilt sind.

15. Schlamm nach einem der Ansprüche 1 bis 8 und 12 bis 14, dessen Zugabe mittlerer Teilchen eine mineralische Zugabe von siliciumhaltigem Sand ist, dessen Teilchen eine mittlere Größe von ungefähr 50 µm haben.

16. Schlamm nach einem der Ansprüche 1 bis 8 und 12 bis 14, dessen Zugabe mittlerer Teilchen eine mineralische Zugabe von gemahlenem Quarz ist.

17. Schlamm nach einem der vorangehenden Ansprüche, dessen wasserlöslicher Wirkstoff gebildet wird durch stark inonisiertes Polymer oder Copolymer, abstammend von sulfurierten Funktionen bzw. Gruppen und/oder von Phosphat, Phosphonat, Carboxylat.

18. Schlamm nach einem der Ansprüche 1 bis 16, dessen wasserlöslicher Wirkstoff ein Wirkstoff aus der Gruppe ist, die gebildet wird durch sulfuriertes Naphtalen, Lignosulfat, Melanin und Analoga.

19. Schlammn nach einem der vorangehenden Ansprüche, dessen wasserlöslicher Wirkstoff ein Verflüssiger ist, der sulfurierte oder phosphatierte Funktionen bzw. Gruppen enthält.

20. Schlamm nach einem der vorangehenden Ansprüche, dessen Wassermenge innerhalb des Bereichs von 20-30% des Gewichts des hydraulischen Bindemittels enthalten ist.

## Claims

1. A cementation slag for the cementation of a well, notably an oil well, **characterised in that** it comprises:
- at least one hydraulic binder of the group constituted by the Class G (API) Portland cements, the Class H (API) Portland cements and the other hydraulic binders with a small aluminate content,
- a microsilica of granulometry in the range of 0.1 to 50 micrometres, in a proportion of 20 to 35% by weight in relation to the hydraulic binder,
- an addition of medium particles, mineral and/or organic, of granulometry in the range of 0.5-200 micrometres, in a proportion of 20 to 35% by weight in relation to the hydraulic binder, the amount of the said addition of medium particles being less than or equal to the amount of microsilica,
- a water-soluble superplasticizing and/or liquefying agent in a proportion of between 1% and 3% by weight in relation to the hydraulic binder, and
- an amount of water equal at most to 30% of the weight of the hydraulic binder.

2. A slag according to Claim 1, in which the hydraulic binder is a Class G Portland cement.

3. A slag according to Claim 1 or 2, in which the hydraulic binder is composed of particles whose sizes are distributed in the range of 0.1-100 micrometres.

4. A slag according to Claim 3, in which the hydraulic binder is composed of particles whose sizes are distributed in the range of 10 to 50 micrometres.

5. A slag according to one of Claims 1 to 4, in which the microsilica is a silica ash coming from the zirconium industry.

6. A slag according to one of the preceding claims, in which the microsilica is present in a proportion of 20-30% by weight in relation to the hydraulic binder.

7. A slag according to one of the preceding claims, in which the microsilica is present in a proportion of 20 to 25% by weight in relation to the hydraulic binder.

8. A slag according to one of the preceding claims, in which the microsilica is composed of a conglomerate and particles whose mean size is close to 3 micrometres.

9. A slag according to any one of the preceding claims, in which the addition of medium particles is an organic addition of balls of plastic material.

10. A slag according to Claim 9, in which the plastic material is polystyrene.

11. A slag according to one of Claims 1 to 8, in which the addition of medium particles is a mineral addition chosen among silica, clay, glass balls, metallic salts, barite, haematite and ilmenite.

12. A slag according to one of Claims 1 to 8, in which the addition of medium particles is a mineral addition of siliceous particles.

13. A slag according to one of the preceding claims, in which the addition of medium particles is present in a proportion of 20 to 30% by weight in relation to the hydraulic binder.

14. A slag according to one of Claims 1 to 8, 12 and 13, in which the addition of medium particles is a mineral addition of silica sand whose particles have sizes distributed in the range of 5-200 micrometres.

15. A slag according to one of Claims 1 to 8 and 12 to 14, in which the addition of medium particles is a mineral addition of silica sand whose particles have a mean size close to 50 micrometres.

16. A slag according to one of Claims 1 to 8 and 12 to 14, in which the addition of medium particles is a mineral addition of crushed quartz.

17. A slag according to one of the preceding claims, in which the water-soluble agent is composed of strongly ionized polymer or copolymer derived from sulphonated groups and/or phosphate, phosphonate or carboxylate.

18. A slag according to any one of Claims 1 to 16, in which the water-soluble agent is an agent of the group constituted by naphthalene sulphonate, lignosulphate, melanin and analogues.

19. A slag according to one of the preceding claims, in which the water-soluble agent is a liquefier containing sulphonated or phosphatized groups.

20. A slag according to one of the preceding claims, in which the amount of water is in the range of 20-30% of the weight of the hydraulic binder.
